# EUROPÄISCHE PATENTSCHRIFT

(11) **EP 3 518 822 B1**
(45) Veröffentlichungstag und Bekanntmachung des Hinweises auf die Patenterteilung: **04.11.2020**
(21) Anmeldenummer: 17784869.4
(22) Anmeldetag: 26.09.2017
(51) Int. Cl.: A61C 17/06

(54) **ZAHNMEDIZINISCHER ABSAUGER MIT KAMERA**
DENTAL SUCTION DEVICE WITH A CAMERA
INSTRUMENT D'ASPIRATION DENTAIRE MUNI D'UNE CAMÉRA

(30) Priorität: 28.09.2016 DE 102016118323
(43) Veröffentlichungstag der Anmeldung: 07.08.2019
(73) Patentinhaber: Cleverdent Ltd., 48149 Münster (DE)
(72) Erfinder: CLASEN, Stephan, 48149 Münster (DE); KAYSER, Martin, 50968 Köln (DE)
(74) Vertreter: Patentanwälte Bauer Vorberg Kayser
(86) Internationale Anmeldenummer: PCT/EP2017/074349
(87) Internationale Veröffentlichungsnummer: WO 2018/060184

(56) Entgegenhaltungen:
- US-A- 5 931 670
- US-A1- 2009 221 991
- US-A1- 2010 190 129

## Beschreibung

Die vorliegende Erfindung betrifft einen zahnmedizinischen Absauger zum Absaugen von Flüssigkeiten und Partikeln aus einem Mundraum eines Patienten, mit einem hohlen Grundkörper, der eine Außenfläche, eine Innenfläche, eine Längsachse, eine Anschlussöffnung und eine Ansaugöffnung aufweist.

Bei zahnmedizinischen Behandlungen ist es oftmals notwendig, anfallende Flüssigkeiten oder gelöste Partikel, beispielsweise Speichel, Spraywasser und Blut während der Behandlung abzusaugen. Auch kann Wasser, beispielsweise zum Reinigen oder nach Anwenden einer Multifunktionsspritze anfallen, das abgesaugt werden muss. Hierzu werden üblicherweise Absauger verwendet, die in der Regel aus einem röhrenförmigen Körper aus Kunststoff gebildet sind, an dessen Ende ein Schlauch befestigt ist, der wiederum mit einer Pumpe verbunden ist. Durch den Schlauch werden die störenden Flüssigkeiten und Festkörper abgeleitet.

Oftmals wird ein Absauger nicht vom behandelnden Zahnarzt oder Zahnchirurgen selbst, sondern von einer oder einem Assistenten geführt und gehalten, weil der behandelnde Zahnarzt mit der einen Hand ein Bohrwerkzeug und mit der anderen Hand einen Spiegel, über den er den zu behandelnden Bereich einsehen kann, halten muss. Nachteilig bei der beschrieben Vorgehensweise ist, dass die beiden Personen sehr eng beieinander um den zu behandelnden Bereich stehen oder sitzen müssen. Dies kann gerade dann, wenn es sich um verhältnismäßig schwierige oder feinmotorisch anspruchsvolle Eingriffe handelt, für den behandelnden Arzt als störend empfunden werden.

Aus der DE 102006048463 A1 ist ein medizinischer Absauger bekannt, bei dem die Innenfläche eine durch die Ansaugöffnung sichtbare verspiegelte Oberfläche aufweist. Die erfindungsgemäße spiegelnde Beschichtung ermöglicht es dem Benutzer, den medizinischen Absauger sowohl als Absauger zum Abführen von Flüssigkeiten und Partikeln, als auch gleichzeitig als Spiegel zu benutzen. Mit Hilfe eines solchen Absaugers ist es ihm nun möglich, die Behandlung ohne eine assistierende Person durchzuführen. Der Absauger wird also gleichzeitig als Absauger und als Spiegel verwendet. Die Grundidee der Kombination der beiden Geräte ist grundsätzlich sehr gut, aber in ihren Möglichkeiten beschränkt.

Weiter ist aus der Patentschrift US 5,931, 670 ein zahnmedizinischer Absauger zum Absaugen von Flüssigkeiten und Partikeln aus einem Mundraum eines Patienten, mit einem rohrförmigen hohlen Grundkörper und einer Ansaugöffnung bekannt.

Die Aufgabe der vorliegenden Erfindung besteht darin, einen gegenüber dem bekannten Spiegelsauger verbesserten Absauger bereitzustellen. Dieser soll ebenfalls die Möglichkeit bieten den Mundraum während des Absaugens einzusehen. Insbesondere soll der Absauger das Dokumentieren von Gegebenheiten im Mundraum oder von Arbeitsfortschritten erleichtern. Der Absauger soll dabei kostengünstig herstellbar und einfach zu Bedienen sein.

Erfindungsgemäß wird die Aufgabe durch einen Absauger mit den Merkmalen des Patentanspruchs 1 gelöst.

Demnach weist der Absauger im Verlauf des Grundkörpers ein Objektiv auf, welches mit einem Monitor verbindbar ist, über den das vom Objektiv aufgenommene Bild darstellbar ist.

Somit ist es möglich, den zu behandelnden Bereich im Mundraum während der Behandlung einerseits direkt und andererseits indirekt über den Monitor einzusehen.

Vorteilhafterweise ist weiterhin ein Prozessor oder Rechner vorgesehen, über den die über das Objektiv aufgenommenen Bilder oder Filmsequenzen bzw. Videos auf einen Datenspeicher gespeichert werden können. Dies ermöglicht eine Dokumentation des Behandlungsprozesses und kann insbesondere auch der Information des Patienten dienen.

Vorteilhafterweise ist es möglich, über einen ebenfalls am Absauger vorgesehenen Betätigungsknopf Einzelbilder oder Videos aufzunehmen und an den Prozessor zur Speicherung weiterzuleiten. Der Behandler kann somit während der Behandlung und ohne diese unterbrechen zu müssen, entscheiden, ob er lediglich das vom Objektiv aufgenommene Bild auf den Monitor übertragen oder ob er dieses aufzeichnen und speichern möchte.

Weiterhin kann das Objektiv eine Vorrichtung zum Vergrößern oder Verkleinern (Zoomfunktion bzw. Zoomvorrichtung) des aufgenommenen Bildes aufweisen. In einer besonders vorteilhaften Variante ist zur Steuerung hierzu seitlich am Absauger ein Betätigungsmittel, vorzugsweise ein Schieberegler oder ein Rad vorgesehen, das mit Objektiv verbunden und mit nur einem Finger während der Behandlung bedienbar ist.

Somit weist der Absauger in einer bevorzugten Ausführungsvariante das Betätigungsmittel für die Zoomvorrichtung und zusätzlich einen Knopf, insbesondere einen Druckknopf zum Beginnen oder Beenden von aufzuzeichnenden Videoaufnahmen oder zur Aufnahme von Fotos auf.

Das Objektiv kann selbst einen Bereich der Innenfläche des Absaugers ausbilden, beispielsweise die Linse, es kann aber auch in einer verschlossenen Vertiefung innerhalb des Grundkörpers angeordnet sein. Ist eine solche Vertiefung vorgesehen, ist diese durch eine durchsichtige Scheibe verschlossen, durch die das Objektiv hindurch filmen kann. Die Vertiefung ist vorteilhafterweise aus hygienischen Gründen vollständig abgedichtet, sodass keine Flüssigkeiten aus dem Mundraum oder der Umgebung in diese eindringen können.

Der Absauger kann im Bereich der Anschlussöffnung Mittel zur elektrischen Verbindung aufweisen. Diese wirken mit entsprechenden Mitteln, die an einem Schlauchende des Schlauches vorgesehen sind, zusammen. Der erfindungsgemäße Absauger kann somit auf den Schlauch aufgesteckt und gleichzeitig, vorzugsweise über eine Steckverbindung, elektrisch verbunden werden.

Die Verbindung mit dem Monitor kann kabellos oder kabelgebunden erfolgen. Erfolgt sie kabelgebunden, sind vorteilhafterweise ebenfalls entsprechende Mittel im Bereich des Schlauchendes vorgesehen. Es bietet sich auch hierzu eine Steckverbindung an.

Die Erfindung wird anhand der nachfolgenden Figur näher erläutert. Diese zeigt lediglich ein Ausführungsbeispiel, die Erfindung soll nicht auf dieses beschränkt sein.

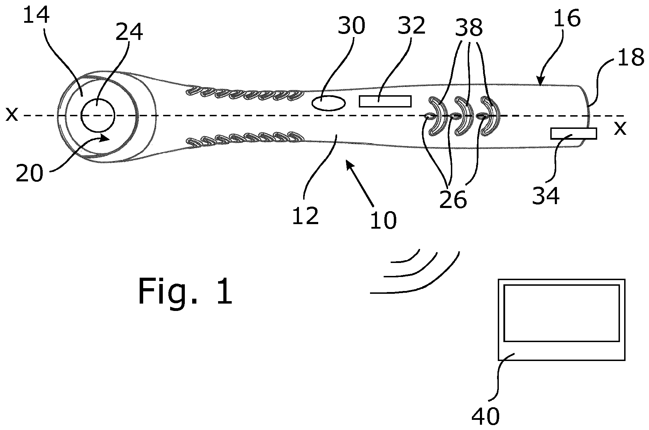

Wie sich aus der Figur ergibt, weist ein erfindungsgemäßer Absauger 10 einen hohlen rohrförmigen Grundkörper 12 mit einer Innenfläche 14 und einer Außenfläche 16 auf. Weiterhin weist der Grundkörper 12 eine Längsachse X-X auf.

Der Grundkörper 12 weist eine Anschlussöffnung 18 für einen nicht gezeigten Schlauch und eine Ansaugöffnung 20 zum Ansaugen von Partikeln und Flüssigkeiten auf. Durch die Ansaugöffnung 20 werden die abzusaugenden Flüssigkeiten oder Partikel eingesogen und durch die Anschlussöffnung 18 über den Schlauch abgeleitet.

Erfindungsgemäß ist innerhalb des Grundkörpers 12 ein Objektiv 24 im Bereich der Ansaugöffnung 20 angeordnet und in Richtung des Mundraums gerichtet, so dass dieser über das Objektiv 24 einsehbar ist. Im gezeigten Ausführungsbeispiel ist das Objektiv 24 vollständig innerhalb des Grundkörpers 12, also in Strömungsrichtung der abzusaugenden Luft hinter der Ansaugöffnung 20 angeordnet. Die angesaugte Luft wird über eine nicht erkennbare Linse des Objektivs 24 oder eine Abdeckung einer Vertiefung oder eines Hohlraums, in der sich das Objektiv 24 befindet, geleitet, wodurch ein Beschlagen effektiv verhindert wird.

Der Absauger 10 weist Zusatzöffnungen 26 auf, durch die ebenfalls Luft angesaugten wird. Die Zusatzöffnungen 26 verhindern einen Unterdruck innerhalb des Grundkörpers 12, wenn die Ansaugöffnung 20 beispielsweise durch die Zunge oder Wange des Patienten verschlossen wird. Im gezeigten Ausführungsbeispiel sind drei Zusatzöffnungen 26 vorgesehen, denkbar ist aber auch nur eine einzige Zusatzöffnung 26 oder auch mehr als drei Zusatzöffnungen 26.

Auf der Außenfläche 16 des Grundkörpers 12 sind Profilelemente 38 erkennbar, die einen sicheren Griff des Absaugers 10 und ein Abrutschen der Finger des behandelnden Zahnarztes verhindern.

Gezeigt ist weiterhin ein Knopf 30, ausgeführt als Druckknopf, der mit nur nur einem Finger bedienbar ist und insbesondere dem Beginnen oder Beenden von aufzuzeichnenden Videoaufnahmen oder der Aufnahme von Fotos dient.

Das Objektiv beinhaltet vorzugsweise eine Vorrichtung zum Vergrößern oder Verkleinern (Zoomfunktion bzw. Zoomvorrichtung) des über das Objektiv 24 aufgenommenen Bildes. Diese kann analog oder digital arbeiten bzw. ausgebildet sein. In einer besonders vorteilhaften Variante ist hierzu seitlich am Absauger 10 ein Schieberegler 32 vorgesehen, der ebenfalls mit nur einem Finger bedienbar ist. Schließlich ist lediglich schematisch ein Mittel 34 dargestellt, dass der elektrischen Verbindung des Absaugers 10 mit einer elektrischen Quelle dient. Hierzu ist am nicht gezeigten Schlauch ein entsprechendes korrespondierendes Mittel vorgesehen.

Im gezeigten Ausführungsbeispiel erfolgt die Verbindung des Objektivs 24 mit einem ebenfalls lediglich symbolisch dargestellt Monitor 40 kabellos, dargestellt durch das Liniensymbol. Für die kabellose Verbindung eignet sich beispielsweise WLAN oder Bluetooth.

Die Erfindung ist nicht auf die beschriebenen Ausführungsbeispiele beschränkt, sondern durch die Patentansprüche definiert. Die beschriebene Ausführungsvariante ist nur beispielhaft und nicht einschränkend zu verstehen. Auch ist es möglich, die gezeigten technischen Merkmale in beliebiger technisch sinnvoller Art und Weise miteinander zu kombinieren.

## Patentansprüche

1. Zahnmedizinischer Absauger (10) zum Absaugen von Flüssigkeiten und Partikeln aus einem Mundraum eines Patienten, mit einem rohrförmigen hohlen Grundkörper (12), der eine Innenfläche (14), eine Außenfläche (16), eine Längsachse (X-X), eine Anschlussöffnung (18) für einen Schlauch und eine Ansaugöffnung (20) aufweist,
**dadurch gekennzeichnet, dass**
im Verlauf des Grundkörpers (12) im Innern des Absaugers (10) in Strömungsrichtung der abzusaugenden Luft hinter der Ansaugöffnung (20) ein Objektiv (24) angeordnet ist, welches mit einem Monitor (40) verbindbar ist, über den in vom Objektiv (24) aufgenommenes Bild darstellbar ist.

2. Zahnmedizinischer Absauger (10) nach Anspruch 1, **dadurch gekennzeichnet, dass** das Objektiv (24) im Bereich der Ansaugöffnung (20) angeordnet ist.

## Claims

1. A dental suction device (10) for suctioning liquids and particles from an oral cavity of a patient, with a tubular hollow main body (12) having an inner surface (14), an outer surface (16), a longitudinal axis (X-X), a connection opening (18) for a hose, and a suction opening (20),
**characterised in that**
in the course of the extent of the main body (12), an objective (24) is provided in the interior of the suction device (10) behind the suction opening (20) as viewed in the flow direction of the air to be suctioned off, which objective can be connected to a monitor (40), by means of which an image taken by the objective (24) can be displayed.

2. The dental suction device (10) according to claim 1, **characterised in that** the objective (24) is disposed in the region of the suction opening (20).

## Revendications

1. Aspirateur médical dentaire (10) pour aspirer des liquides et particules d'un espace buccal d'un patient, comprenant un corps de base (12) creux tubulaire qui présente une face intérieure (14), une face extérieure (16), un axe longitudinal (X-X), une ouverture de connexion (18) pour un tuyau et une ouverture d'aspiration (20),
**caractérisé en ce que**
dans le déroulement du corps de base (12), à l'intérieur de l'aspirateur (10), dans le sens d'écoulement de l'air à aspirer derrière l'ouverture d'aspiration (20), est disposé un objectif (24) qui peut être relié à un écran (40) par le biais duquel une image prise par l'objectif (24) peut être affichée.

2. Aspirateur médical dentaire (10) selon la revendication 1, **caractérisé en ce que** l'objectif (24) est disposé au niveau de l'ouverture d'aspiration (20).
